# EUROPÄISCHE PATENTSCHRIFT

(11) **EP 2 608 709 B1**
(45) Veröffentlichungstag und Bekanntmachung des Hinweises auf die Patenterteilung: **23.07.2014**
(21) Anmeldenummer: 11741243.7
(22) Anmeldetag: 10.08.2011
(51) Int. Cl.: A47J 43/25

(54) **VORRICHTUNG MIT VERMINDERTER HAFT- UND GLEITREIBUNG**
DEVICE WITH REDUCED STATIC AND SLIDE FRICTION
DISPOSITIF À FROTTEMENT PAR ADHÉRENCE ET FROTTEMENT DE GLISSEMENT RÉDUITS

(30) Priorität: 24.08.2010 DE 102010039719
(43) Veröffentlichungstag der Anmeldung: 03.07.2013
(73) Patentinhaber: BSH Bosch und Siemens Hausgeräte GmbH, 81739 München (DE)
(72) Erfinder: WICHERT, Karline, 81379 München (DE); CATER, Matej, 3301 Petrovce (SI); MAZEJ, Stanislav, 3303 Gomilsko (SI); JEGRISNIK, Uros, 3313 Polzela (SI); BLAGOTINSEK, Andrej, 2380 Slovenj Gradec (SI)
(86) Internationale Anmeldenummer: PCT/EP2011/063776
(87) Internationale Veröffentlichungsnummer: WO 2012/025386

(56) Entgegenhaltungen:
- US-A- 2 897 862
- US-A- 5 435 237
- US-A1- 2004 159 624

## Beschreibung

### Gebiet der Erfindung

Die vorliegende Erfindung betrifft eine Vorrichtung für ein Küchengerät.

### Hintergrund der Erfindung

Beispielsweise ist aus der deutschen Patentschrift DE 197 15 953 C1 ein Schnitzelgerät für eine Küchenmaschine bekannt, das mit einer Arbeitskammer, in der eine Schneidscheibe und darunter ein Ausräumerflügel rotieren, ausgestattet ist. In der Seitenwandung der Arbeitskammer befindet sich eine Ausräumöffnung, von welcher sich ein Auswurfschacht mit einer ausgangsseitigen Auswurföffnung schräg nach unten erstreckt. Der Auswurfschacht weist zwei Schachtseitenwandungen auf und ist von oben her durch eine am Gehäuse anscharnierte Haube geschlossen.

Weiter offenbart die Auslegeschrift DE 1 077 400 B ein Schnitzelgerät mit einem schüsselförmigen Gehäuse. Das durch einen Stutzen zugeführte Gut wird von einer Arbeitsscheibe zerkleinert. Das zerkleinerte Gut fällt auf den Schüsselboden und wird von einem flächenförmigen Abstreifer zu einem Auslaufrohr der Schüssel befördert.

Schließlich ist aus der Patentschrift DE 32 49 220 C2 eine elektrische Küchenmaschine mit einem Behälter, in dem ein Messer und ein Scheibenelement drehbar untergebracht sind, bekannt. An einem Teil des Behälters ist eine Austragöffnung vorgesehen, die als Durchgang zur Ausgabe der von dem Messer verarbeiteten Schnittstücke aus dem Behälter dienen kann.

In dem Patent US 5,435,237 ist ein Bearbeitungsgerät für Lebensmittel offenbart, das eine rotierende Trommel umfasst, die in Längsrichtung verlaufende Schlitze aufweist, in denen Schneidmesser in tangentialer Anordnung befestigt sind. Mit dem bogenförmigen Körper einer Andruckplatte kann ein Benutzer zu zerkleinernde Lebensmittel gegen den Körper der Trommel pressen. Wird die Trommel in Rotation versetzt, werden die Lebensmittel von den Schneidmessern in Stücke geschnitten. Die Stücke gelangen in den Innenraum der Trommel und werden in diesem zu einer Bodenöffnung geführt, wobei in Längsrichtung verlaufende Rippen ein Anhaften an der Innenwand des Körpers der Trommel verhindern.

In der Veröffentlichung US 2004/0159624 A1 ist ein Behälter für einen Mischer zum Mischen insbesondere von hochviskosen Flüssigkeiten beschrieben, der an seinen Seitenwänden und am Boden angeordnete Flügel aufweist, um die Verwirbelungstendenz des von einer Mischblattanordnung erzeugten Stroms zu reduzieren und diesen in einen konzentrierten Strom aufwärts bewegter Flüssigkeit zu fokussieren. Das Patent US 2,897,862 offenbart einen Mischer für Flüssigkeiten bzw. zum Mischen von Flüssigkeiten und Feststoffen, um eine flüssige Mischung zu erzeugen. Auf der Innenseite des Behälters sind größere und kleinere Rippen angeordnet, die der Entstehung einer strudelförmigen Strömung entgegen wirken sollen.

### Der Erfindung zugrundeliegende Aufgabe

Der Erfindung liegt die Aufgabe zugrunde, eine gegenüber dem Stand der Technik verbesserte Vorrichtung für ein Küchengerät bereitzustellen. Insbesondere soll eine Vorrichtung mit einem Innenraum bereitgestellt werden können, in welchem Nahrungsmittel leichter geführt werden können.

### Erfindungsgemäße Lösung

Die Lösung der gestellten Aufgabe gelingt durch eine Vorrichtung gemäss Anspruch 1.

Ein Küchengerät kann beispielswiese zur Zubereitung von Nahrungsmitteln genutzt werden. Das Küchengerät kann hierzu mit elektrischer Energie betrieben werden, wobei sowohl netzbetriebene als auch Batterie- oder Akkugeräte eingeschlossen sind. Durch die elektrische Energie kann z.B. ein Elektromotor des Küchengeräts angetrieben werden. Das Küchengerät kann beispielsweise eine Kaffeemaschine, eine Zitruspresse, eine Knetmaschine oder eine Universal-Küchenmaschine sein.

Erfindungsgemäß wird der Innenraum der Vorrichtung zum Führen von Nahrungsmitteln genutzt, z.B. um Nahrungsmittel zu einem Aufbewahrungs-, Sammel- oder Bearbeitungsraum zu transportieren.

Das Volumen des Innenraums, durch welches die Nahrungsmittel transportiert werden können, wird zumindest teilweise durch die Innenseite mit der erfindungsgemäßen Ausbuchtung begrenzt. Die Vorrichtung kann natürlich weitere Innenseiten aufweisen, durch die der Innenraum begrenzt werden kann. Eine Ausbuchtung ist eine Ausweitung oder Wölbung der Innenseite, die erfindungsgemäß in Richtung des Inneren des Innenraums orientiert ist.

Die Erfindung nutzt aus, dass die Kontaktfläche zwischen den zu führenden Nahrungsmitteln und der Innenseite des Innenraums durch die Ausbuchtung verkleinert werden kann, um das Anhaften von Nahrungsmitteln an der Innenseite zu verringern. Durch Verringerung der Kontaktfläche zwischen Nahrungsmittel und der Innenseite kann nämlich die Haft- und/oder Gleitreibung der Nahrungsmittel an der Innenseite reduziert werden, so dass die Nahrungsmittel weniger stark an der Innenseite anhaften und dadurch besser an dieser entlang gleiten können. Besonders bei Nahrungsmitteln, die z.B. durch eine Reinigung oder eine Zubereitung feucht geworden sind, kann sich die reduzierte Haft- und/oder Gleitreibung als besonderer Vorteil erweisen, da feuchte Nahrungsmittel stärker an Flächen anhaften können.

Da Nahrungsmittel aufgrund der Ausbuchtung besser an der Innenseite entlang gleiten können, ist vorteilhafterweise erreichbar, dass der zum Führen von Nahrungsmitteln genutzte Innenraum weniger häufig verstopft.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführung der Erfindung ist das in den Innenraum ragende Ende der Ausbuchtung abgerundet. Durch das abgerundete Ende der Ausbuchtung ist erreichbar, dass die Kontaktfläche der Nahrungsmittel mit der Ausbuchtung verringert wird, da Nahrungsmittel die Ausbuchtung beispielsweise tangential Berühren können. Beispielsweise kann die Ausbuchtung an dem in den Innenraum ragenden Ende mit einem Radius versehen, also rund ausgeführt sein, wobei die Ausbuchtung in einem zu der Innenseite senkrechten Querschnitt an dem Ende ein Kreissegment aufweist. Der Kreisbogen des Kreissegments ist vorzugsweise in Richtung des Innenraums orientiert, um von Nahrungsmitteln berührt werden zu können. Besonders vorzugsweise ist die Außenkontur der Ausbuchtung, z.B. in einem Querschnitt senkrecht zu der Innenseite, glatt, also ohne Kanten ausgeführt. In einer alternativen Ausführung kann das in den Innenraum ragende Ende der Ausbuchtung abgeflacht sein, wobei die Nahrungsmittel an einer Fläche am Ende der Ausbuchtung anliegen können.

In einer weiteren bevorzugten Ausführungsform ist die Vorrichtung als Durchlaufschnitzler zum Zerkleinern von Nahrungsmitteln ausgebildet. Besonders vorzugsweise ist die Vorrichtung als Aufsatz ausgebildet, um für ein Küchengerät, das ein Multifunktionsgerät sein kann, nutzbar zu sein. Ein Multifunktionsgerät, häufig auch als Universal-Küchenmaschine bezeichnet, kann z.B. zum Zerkleinern, Kneten oder Mixen von Nahrungsmitteln genutzt werden. Die Vorrichtung kann als Durchlaufschnitzler die Nahrungsmittel zerkleinern, indem sie diese schreddert, schneidet, häckselt oder raspelt. Die zerkleinerten Nahrungsmittel können z.B. Scheiben, Schnittstücke oder Raspelstücke sein. Da die von einem Durchlaufschnitzler zerkleinerten Nahrungsmittel häufig glatte Schnittflächen aufweisen, mit denen sie leicht an Oberflächen anhaften können und da durch die Ausbuchtung das Anhaften von Nahrungsmitteln an Oberflächen vermindert werden kann, kann sich die erfindungsgemäße Ausbuchtung bei einer als Durchlaufschnitzler ausgebildeten Vorrichtung als besonders vorteilhaft erweisen. Mit einem Durchlaufschnitzler werden zudem häufig Nahrungsmittel mit hohem Flüssigkeits- und/oder Zuckergehalt, wie z.B. Früchte, zerkleinert. Aufgrund der Feuchtigkeit und/oder des Zuckers, der beim Zerkleinern austreten kann, neigen solche Nahrungsmittel verstärkt dazu, an Flächen anzuhaften, dem vorteilhafterweise durch die erfindungsgemäße Ausbuchtung entgegengewirkt werden kann.

Erfindungsgemäß ist der Innenraum als Auswurfschacht zum Führen von Nahrungsmitteln ausgebildet. Es ist ein erreichbarer Vorteil der zumindest einen Ausbuchtung, dass Nahrungsmittel beim Transport durch den Auswurfschacht leichter durch den Auswurfschacht gleiten können und der Auswurfschacht dadurch weniger schnell verstopfen kann. Nach einer überraschenden Erkenntnis der Erfinder kann das Risiko einer Verstopfung trotz Verringerung des Innenvolumens des Innenraums durch Anbringen der Ausbuchtung vermindert und der Ausfluss der Nahrungsmittel aus dem Auswurfschacht verbessert werden. Die erfindungsgemäße Ausbuchtung kann bei einem Durchlaufschnitzler dazu führen, dass dieser weniger häufig oder sogar überhaupt nicht mehr aufgrund von Verstopfungen gereinigt werden muss. Vorteilhafterweise kann ein für den Benutzer angenehmerer Betrieb ermöglicht werden, da eine größere Menge an Nahrungsmitteln bearbeitet werden kann, bevor eine Reinigung zur Entfernung einer Verstopfung notwendig wird.

Erfindungsgemäss weist die Vorrichtung einen Bearbeitungsraum auf, der mit dem Auswurfschacht verbunden sein kann. In dem Bearbeitungsraum können Nahrungsmittel bearbeitet oder zubereitet werden. Bei einem Durchgangsschnitzler befindet sich vorzugsweise in dem Bearbeitungsraum ein Schneidewerkzeug, um Nahrungsmittel zu zerkleinern, also zu bearbeiten. Das Schneidewerkzeug kann z.B. scheibenförmig ausgeführt und rotierbar in dem Bearbeitungsraum gelagert sein, wobei das scheibenförmige Schneidewerkzeug zum Zerkleinern der Nahrungsmittel rotiert werden kann. Besonders vorzugsweise weist der Durchgangsschnitzler einen Ausräumerflügel auf, um die an die Innenwände des Bearbeitungsraums geschleuderten zerkleinerten Nahrungsmittel von den Innenwänden entfernen zu können. Durch den Auswurfschacht können z.B. bearbeitete Nahrungsmittel von dem Bearbeitungsraum in einen Auffangbehälter transportiert werden. Der Auffangbehälter kann z.B. an eine Auswurföffnung des Auswurfschachts gehalten werden.

Erfindungsgemäß ist vorgesehen, dass die Vorrichtung einen Bearbeitungsraum aufweist, und sich die Innenseite mit der Ausbuchtung in den Bearbeitungsraum erstreckt. Die Innenseite des Innenraums mit der Ausbuchtung kann also auch den Bearbeitungsraum zumindest teilweise begrenzen. Beispielsweise kann ein zylinderförmiger Bearbeitungsraum an einem Abschnitt der Zylinderwand ausgebaucht sein, um einen Übergang von dem Bearbeitungsraum in den Innenraum zu schaffen. Dieser Abschnitt kann erfindungsgemäß ein Teil der Innenseite des Innenraums mit der Ausbuchtung sein, der sich in den Bearbeitungsraum erstreckt. Dadurch, dass sich die Innenseite mit der Ausbuchtung in den Bearbeitungsraum erstreckt, können Nahrungsmittel nach der Bearbeitung schneller aus dem Bearbeitungsraum transportiert werden. Die bearbeiteten Nahrungsmittel können nämlich an die Innenwand befördert werden und sich aufgrund der Ausbuchtung leicht von dieser lösen, um durch den Innenraum transportiert zu werden. Beispielsweise können die bearbeiteten Nahrungsmittel durch ein rotierendes Werkzeug an die Innenseite mit der Ausbuchtung geschleudert werden und anschließend durch den Innenraum rutschen.

In einer bevorzugten Ausführung der Erfindung ist die Innenseite der Vorrichtung mit der zumindest einen Ausbuchtung im bestimmungsgemäßen Betrieb der Vorrichtung vertikal orientiert. Im bestimmungsgemäßen Betrieb ist die Vorrichtung mit dem Küchengerät zur Bearbeitung von Nahrungsmitteln verbunden. Die Innenseite ist dann vertikal orientiert, wenn die Tangentialebenen der Innenseite mit einer vertikalen Ebene einen Winkel von maximal 20°, besonders vorzugsweise von maximal 10° einschließen. Besonders vorzugsweise weist der Innenraum eine vertikale Längsorientierung auf. Vorteilhafterweise können die Nahrungsmittel an der vertikalen Seite mit der Ausbuchtung besser nach unten gleiten, z.B. um in einen Aufbewahrungsbehälter oder einen Sammelraum zu fallen.

In einer weiteren bevorzugten Ausführungsform weist die Ausbuchtung eine Längserstreckung auf. Hierbei schließen die Richtung der Längserstreckung der Ausbuchtung und die Flächennormalen der Innenseite an den Stellen, an welchen die Ausbuchtung an der Innenseite angeordnet ist, jeweils einen rechten Winkel ein. Dadurch, dass die Ausbuchtung eine Längserstreckung aufweist, können Nahrungsmittel noch besser entlang der Innenseite des Innenraums in Richtung der Längserstreckung der Ausbuchtung gleiten. In einer besonders bevorzugten Ausführung ist der Innenraum längserstreckt. In dieser Ausführung kann die Ausbuchtung mit ihrer Längserstreckung in Richtung der Längserstreckung des Innenraums orientiert sein. Besonders vorzugsweise ist die Längserstreckung der Ausbuchtung in eine Auswurfrichtung des als Auswurfschacht ausgebildeten Innenraums orientiert. Die Auswurfrichtung ist hierbei die Richtung, in der Nahrungsmittel durch den Innenraum transportiert werden können. Die Auswurfrichtung kann z.B. einer Längserstreckung des Auswurfschachts entsprechen. Die Ausbuchtung mit einer Längserstreckung kann z.B. als Rippe oder Steg ausgeführt sein. Alternativ hierzu kann die Ausbuchtung als Noppe ausgeführt sein, die z.B. eine runde oder rechteckig ausgebildete Grundfläche aufweisen kann.

Die Erfindung weiterbildend ist vorzugsweise vorgesehen, dass die Vorrichtung mehrere Ausbuchtungen an der Innenseite aufweist. Die Ausbuchtungen können z.B. in einem Raster angeordnet sein, wobei der Abstand der Ausbuchtungen zueinander konstant sein kann. Dadurch, dass die Innenseite mehrere Ausbuchtungen aufweist, kann die Haft- und/oder Gleitreibung der Nahrungsmittel an der Innenseite weiter reduziert werden. Bei mehreren Ausbuchtungen kann die Innenseite des Innenraums z.B. wellenförmig ausgebildet sein. Besonders vorzugsweise weisen die Ausbuchtungen die gleiche Breite und/oder die gleiche Länge auf.

Erfindungsgemäß ist vorzugsweise vorgesehen, dass die Ausbuchtungen eine Längserstreckung aufweisen und parallel zueinander verlaufen. Hierbei können die Ausbuchtungen einen Abstand zueinander aufweisen, der senkrecht und/oder parallel auf der Richtung der Längserstreckung der Ausbuchtungen steht. Bei einem Abstand senkrecht zu der Richtung der Längserstreckung sind die Ausbuchtungen nebeneinander angeordnet. Der Abstand ist parallel zu der Richtung der Längserstreckung, wenn die Ausbuchtungen hintereinander angeordnet sind. Da die Ausbuchtungen in ihrer Längserstreckung parallel zueinander verlaufen, wobei die Ausbuchtungen hintereinander und/oder nebeneinander in einem Raster angeordnet sein können, können Nahrungsmittel noch leichter an der Innenseite entlang geführt werden.

In einer bevorzugten Ausführung der Vorrichtung ist der Abstand zwischen den Ausbuchtungen größer als die Breite der breitesten Ausbuchtung. Hierdurch ist eine Verringerung der Kontaktfläche der Nahrungsmittel mit dem Innenraum erreichbar, da die Nahrungsmittel vorteilhafterweise an den Ausbuchtungen der Innenfläche des Innenraums aufliegen und zwischen den Ausbuchtungen ein Kontakt der Nahrungsmittel mit der Innenseite vermieden werden kann. Dies kann die Haft- und/oder Gleitreibung der Nahrungsmittel an der Innenseite weiter reduzieren, sodass die Nahrungsmittel noch besser an der Innenseite entlang gleiten können. Beispielsweise können die Ausbuchtungen ca. 1 bis 2 mm breit sein und mit einem Abstand von ca. 2 cm zueinander an der Innenseite der Vorrichtung angeordnet sein. In einer alternativen Ausführung ist der Abstand zwischen den Ausbuchtungen geringer als die Breite der breitesten oder sogar der schmalsten Ausbuchtung. In einer solchen Ausführung können die Ausbuchtungen so breit ausgeführt sein und so eng aneinander angeordnet sein, dass die Abstände zwischen den Ausbuchtungen als Nuten erscheinen.

In einer weiteren bevorzugten Ausführungsform ist die Ausbuchtung einstückig an die Vorrichtung angeformt. Die Ausbuchtung ist dann an die Vorrichtung einstückig angeformt, wenn die Vorrichtung und die Ausbuchtung aus einem einheitlichen Material gefertigt sind und ein gemeinsames Bauteil bilden, also aus einem Stück sind. Hierdurch können die Vorrichtung und die Ausbuchtung in einem Herstellungsschritt hergestellt werden, so dass die Fertigung der Vorrichtung vereinfacht werden kann. Die Ausbuchtung muss nämlich nicht in einem speziellen Herstellungsschritt gesondert aufgebracht, z.B. aufgeklebt werden. Weiter kann die Vorrichtung mit der einstückig angeformten Ausbuchtung in den gängigen Prozessen, z.B. durch Spritzguss, einfach hergestellt werden. Ein weiterer Vorteil der einstückig angeformten Ausbuchtung kann eine zuverlässigere Befestigung der Ausbuchtung an der Vorrichtung sein.

Die vorliegende Erfindung ermöglicht mit einfachen konstruktiven und kostengünstigen Mitteln die Bereitstellung einer Vorrichtung für ein Küchengerät, die ein verbessertes Führen von Nahrungsmitteln ermöglichen kann.

Insbesondere kann eine Vorrichtung mit einem Innenraum bereitgestellt werden, an dessen Innenseite Nahrungsmittel besser entlang gleiten können.

### Kurzbeschreibung der Zeichnungen

Weitere vorteilhafte Ausgestaltungen werden nachfolgend an Hand eines in den Zeichnungen dargestellten Ausführungsbeispiels, auf welches die Erfindung jedoch nicht beschränkt ist, näher beschrieben.

Es zeigt schematisch:

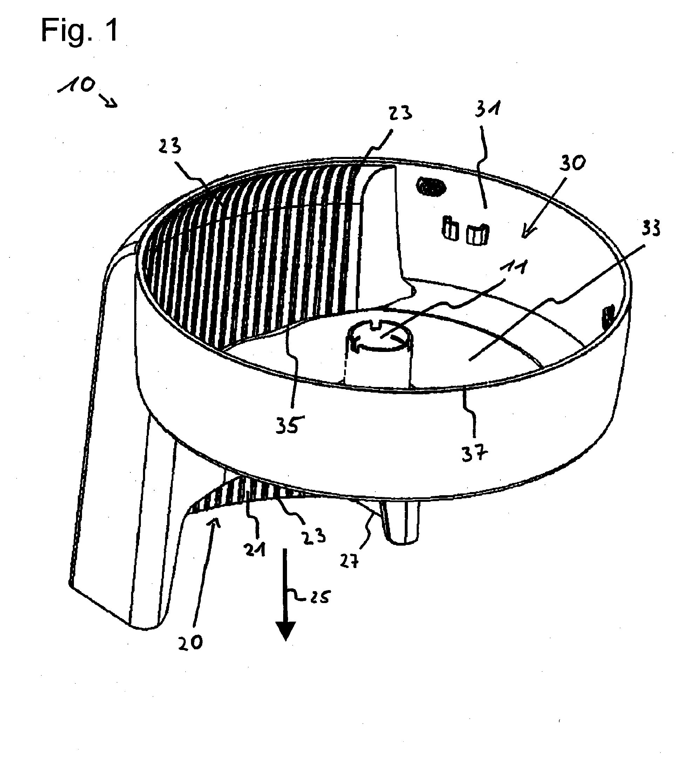

Fig. 1 eine Vorrichtung für ein Küchengerät in einer perspektivischen Darstellung.

### Ausführliche Beschreibung der Erfindung anhand von einem Ausführungsbeispiel

Bei der nachfolgenden Beschreibung einer bevorzugten Ausführungsform der vorliegenden Erfindung bezeichnen gleiche Bezugszeichen gleiche oder vergleichbare Komponenten.

Das Ausführungsbeispiel wird im Folgenden anhand der Fig. 1 erläutert Fig. 1 ist eine perspektivische Darstellung einer als Durchlaufschnitzler zum Zerkleinern von Nahrungsmitteln ausgebildeten Vorrichtung 10 für ein Küchengerät. Die Vorrichtung 10 kann auf ein elektrisches Küchengerät montiert werden, die als Multifunktionsgerät ausgeführt ist. Neben der erfindungsgemäßen Vorrichtung 10 zum Zerkleinern von Nahrungsmitteln kann das Küchengerät mit weiteren Aufsätzen, z.B. zum Mixen oder Kneten betrieben werden.

In einen Bearbeitungsraum 30 der Vorrichtung 10 kann ein als Schneidscheibe ausgeführtes scheibenförmiges Schneidewerkzeug eingesetzt werden. Aus Darstellungsgründen ist das Schneidewerkzeug in Fig. 1 nicht gezeigt. Wenn die Vorrichtung 10 an dem Küchengerät angebracht wird, wird eine Antriebswelle des Küchengeräts durch eine Öffnung 11 der Vorrichtung 10 geführt, um in eine Mitnahmeöffnung des Schneidewerkzeugs einzugreifen. Die Mitnahmeöffnung des Schneidewerkzeugs ist schlitzförmig ausgeführt, so dass das Schneidewerkzeug durch die Welle des Küchengeräts rotiert werden kann. Der als offener Zylinder ausgebildete Bearbeitungsraum 30 ist mit einem abnehmbaren Deckel verschließbar, der ebenfalls aus Darstellungsgründen nicht gezeigt ist. In der Mitte des Deckels ist ein Deckellager vorgesehen, in das die Antriebswelle, nachdem sie durch die Mitnahmeöffnung des Schneidewerkzeugs gesteckt wurde, eingreifen kann, um drehbar in der Öffnung 11 und dem Deckellager gelagert zu sein.

In dem nicht gezeigten Deckel ist in an sich bekannter Weise ein rohrförmig nach oben ragender Stopferschacht mit einer bei montiertem Deckel knapp oberhalb des Schneidewerkzeugs angeordneten Befüllöffnung ausgebildet. Im Stopferschacht sind ein großer erster Stopfer und in diesem ein kleinerer zweiter Stopfer herausnehmbar eingesetzt. Durch den Stopferschacht können Nahrungsmittel wie z.B. Karotten oder Gurken eingeführt werden, um durch das Schneidewerkzeug zerkleinert zu werden. Die zu zerkleinernden Nahrungsmittel können zusätzlich durch den ersten und/oder zweiten Stopfer gegen das Schneidewerkzeug gedrückt werden.

In dem Bearbeitungsraum 30 ist weiter ein in Fig. 1 nicht gezeigter Ausräumerflügel in an sich bekannter Weise rotierbar angebracht, um zerkleinerte Nahrungsmittel, die während der Bearbeitung an die Mantelseite 31 oder die Unterseite 33 des Bearbeitungsraums 30 befördert wurden, abzuschaben. An der Unterseite 33 sowie der Mantelseite 31 des zylinderförmigen Bearbeitungsraums 30 ist über einen kreisabschnittsförmigen Umfangsbereich von etwa 90° eine Ausräumöffnung 35 ausgebildet. An die Ausräumöffnung 35 schließt sich ein Innenraum 20 der Vorrichtung 10 an den Bearbeitungsraum 30 an, der als Auswurfschacht zum Führen der durch das Schneidewerkzeug zerkleinerten Nahrungsmittel ausgebildet ist. Durch den Innenraum 20 können die zerkleinerten Nahrungsmittel in einer Auswurfrichtung 25, die in Längserstreckung des Innenraums 20 orientiert ist, von dem Bearbeitungsraum durch die Ausräumöffnung und den Innenraum 20 transportiert werden, um den Innenraum 20 durch die Auswurföffnung 27 zu verlassen. Im bestimmungsgemäßen Betrieb der Vorrichtung 10, also wenn die Vorrichtung 10 an dem Küchengerät montiert ist und Nahrungsmittel zerkleinert werden, ist der Innenraum 20 in seiner Längserstreckung vertikal orientiert, wobei die Auswurfrichtung 25 ebenfalls vertikal verläuft, so dass die zerkleinerten Nahrungsmittel in ein unter einer Auswurföffnung 27 des Innenraums 20 gestellten Auffangbehälter fallen können. Der Innenraum 20 erstreckt sich also ausgehend von dem Bearbeitungsraum 30 nach unten. Bei montierter Vorrichtung 10 verläuft die durch die Öffnung 11 geführte Antriebswelle des Küchengeräts parallel zu der Auswurfrichtung 25 und der Längserstreckung des Innenraums 20. Dies ermöglicht die in Fig. 1 gezeigte platzsparende Konstruktion der Vorrichtung 10.

Damit die zerkleinerten Nahrungsmittel besser durch den Innenraum 20 geführt werden können und eine Verstopfung des Innenraums 20 während des Zerkleinerns der Nahrungsmittel vermieden werden kann, sind an die Vorrichtung 10 an einer Innenseite 21 des Innenraums 20 mehrere Ausbuchtungen 23 einstückig angeformt, die in Richtung des Inneren des Innenraums 20 orientiert sind. Die Innenseite 21 mit den Ausbuchtungen 23 erstreckt sich zudem in den Bearbeitungsraum 30, wobei die Innenseite 21 an dem oberen, kreisförmigen Umfangsrand 37 des nach oben offenen zylinderförmigen Bearbeitungsraums 30 endet. Hierbei ist der zylinderförmige Bearbeitungsraum 30 in dem Abschnitt der Mantelseite 31, in dem der Innenraum 20 in den Bearbeitungsraum 30 übergeht, ausgebaucht. Weiter ist die Innenseite 21 mit den Ausbuchtungen 23 entlang der Längserstreckung des Innenraums 20 orientiert, so dass die Innenseite 21 im bestimmungsgemäßen Betrieb der Vorrichtung 10 vertikal orientiert ist. Die Vorrichtung 10 mit dem Bearbeitungsraum 30, dem Innenraum 20 und den einstückig angeformten Ausbuchtungen 23 ist ein Kunststoffteil und wurde durch Spritzguss in einem Herstellungsschritt gefertigt.

Die Ausbuchtungen 23 sind als Rippen ausgebildet und weisen eine Längserstreckung auf, die in Richtung der Auswurfrichtung 25 orientiert ist. Die Ausbuchtungen 23 verlaufen zueinander parallel und sind gleich breit. Der Abstand zwischen den parallelen Ausbuchtungen 23, der etwa 2 cm beträgt, ist hierbei größer als die Breite der Ausbuchtungen, die etwa 1,5 mm beträgt. Weiter sind die Ausbuchtungen 23 jeweils an dem Ende, das in den Innenraum 20 hinein ragt, mit einem Radius versehen, also abgerundet. Durch die so gestalteten Ausbuchtungen 23 können zerkleinerte Nahrungsmittel leichter durch den Innenraum 20 geführt werden, da die Haft- und/oder Gleitreibung der Nahrungsmittel an der Innenseite 21 des Innenraums 20 reduziert wird. Die zerkleinerten Nahrungsmittel liegen nämlich nicht vollflächig an der Innenseite 21, sondern nur noch tangential an den Ausbuchtungen 23 an.

Die vorliegende Erfindung ermöglicht mit einfachen konstruktiven und kostengünstigen Mitteln die Bereitstellung einer Vorrichtung für ein Küchengerät, die ein verbessertes Führen von Nahrungsmitteln ermöglichen kann. Insbesondere kann eine Vorrichtung mit einem Innenraum bereitgestellt werden, an dessen Innenseite Nahrungsmittel besser entlang gleiten können.

Die Bezugszeichen in sämtlichen Ansprüchen haben keine einschränkende Wirkung, sondern sollen lediglich deren Lesbarkeit verbessern.

### Bezugszeichenliste

- 10: Vorrichtung
- 11: Öffnung
- 20: Innenraum
- 21: Innenseite
- 23: Ausbuchtung
- 25: Auswurfrichtung
- 27: Auswurföffnung
- 30: Bearbeitungsraum
- 31: Mantelseite
- 33: Unterseite
- 35: Ausräumöffnung
- 37: Umfangsrand

## Patentansprüche

1. Vorrichtung (10) für ein Küchengerät, wobei die Vorrichtung (10) einen Innenraum (20) aufweist, der als Auswurfschacht zum Führen von Nahrungsmitteln ausgebildet ist, und wobei die Vorrichtung (10) an einer Innenseite (21) des Innenraums (20) zumindest eine Ausbuchtung (23) aufweist, die in Richtung des Inneren des Innenraums (20) orientiert ist, um die Haft- und/oder Gleitreibung von Nahrungsmitteln an der Innenseite (21) zu reduzieren, **dadurch gekennzeichnet, dass** die Vorrichtung (10) einen Bearbeitungsraum (30) aufweist, und sich die Innenseite (21) mit der Ausbuchtung (23) in den Bearbeitungsraum (30) erstreckt.

2. Vorrichtung (10) nach Anspruch 1, **dadurch gekennzeichnet, dass** das in den Innenraum ragende Ende der Ausbuchtung (23) abgerundet ist.

3. Vorrichtung (10) nach Anspruch 1 oder 2, **dadurch gekennzeichnet, dass** die Vorrichtung (10) als Durchlaufschnitzler zum Zerkleinern von Nahrungsmitteln ausgebildet ist.

4. Vorrichtung (10) nach einem der vorherigen Ansprüche, **dadurch gekennzeichnet, dass** die Innenseite (21) der Vorrichtung (10) mit der zumindest einen Ausbuchtung (23) im bestimmungsgemäßen Betrieb der Vorrichtung (10) vertikal orientiert ist.

5. Vorrichtung (10) nach einem der vorherigen Ansprüche, **dadurch gekennzeichnet, dass** die Ausbuchtung (23) eine Längserstreckung aufweist.

6. Vorrichtung (10) nach einem der vorherigen Ansprüche, **dadurch gekennzeichnet, dass** die Vorrichtung (10) mehrere Ausbuchtungen (23) an der Innenseite (21) aufweist.

7. Vorrichtung (10) nach Anspruch 6, **dadurch gekennzeichnet, dass** die Ausbuchtungen (23) eine Längserstreckung aufweisen und parallel zueinander verlaufen.

8. Vorrichtung .(10) nach Anspruch 7, **dadurch gekennzeichnet, dass** der Abstand zwischen den Ausbuchtungen (23) größer als die Breite der breitesten Ausbuchtung ist.

9. Vorrichtung (10) nach einem der vorherigen Ansprüche, **dadurch gekennzeichnet, dass** die Ausbuchtung (23) einstückig an die Vorrichtung (10) angeformt ist.

## Claims

1. Device (10) for a kitchen appliance, wherein the device (10) has an internal chamber (20), which is configured as an ejection chute for guiding food, and wherein the device (10) has at least one protrusion (23) on an inner face (21) of the internal chamber (20), said protrusion (23) being oriented in the direction of the interior of the internal chamber (20), in order to reduce the static and/or slide friction of food on the inner face (21), **characterised in that** the device (10) has a processing chamber (30) and the inner face (21) with the protrusion (23) extends into the processing chamber (30).

2. Device (10) according to claim 1, **characterised in that** the end of the protrusion (23) projecting into the internal chamber is rounded.

3. Device (10) according to claim 1 or 2, **characterised in that** the device (10) is configured as a slicer for chopping food.

4. Device (10) according to one of the preceding claims, **characterised in that** the inner face (21) of the device (10) with the at least one protrusion (23) is oriented vertically when the device (10) is operated correctly.

5. Device (10) according to one of the preceding claims, **characterised in that** the protrusion (23) has a longitudinal extension.

6. Device (10) according to one of the preceding claims, **characterised in that** the device (10) has a number of protrusions (23) on the inner face (21).

7. Device (10) according to claim 6, **characterised in that** the protrusions (23) have a longitudinal extension and run parallel to one another.

8. Device (10) according to claim 7, **characterised in that** the distance between the protrusions (23) is greater than the width of the widest protrusion.

9. Device (10) according to one of the preceding claims, **characterised in that** the protrusion (23) is moulded onto the device (10) as a single piece.

## Revendications

1. Dispositif (10) pour un appareil de cuisine, dans lequel le dispositif (10) présente un espace intérieur (20) exécuté sous forme de tuyère d'éjection pour le guidage d'aliments et dans lequel le dispositif (10) présente sur une face intérieure (21) de l'espace intérieur (20) au moins un bombement (23) orienté vers l'intérieur de l'espace intérieur (20), afin de réduire l'adhérence et/ou le frottement de glissement des aliments sur la face intérieure (21), **caractérisé en ce que** le dispositif (10) présente un espace de traitement (30) et **en ce que** la face intérieure (21) s'étend avec le bombement (23) dans l'espace de traitement (30).

2. Dispositif (10) selon la revendication 1, **caractérisé en ce que** l'extrémité du bombement (23) faisant saillie dans l'espace intérieur est arrondie.

3. Dispositif (10) selon la revendication 1 ou 2, **caractérisé en ce que** le dispositif (10) est exécuté sous forme de robot découpeur pour réduire des aliments en morceaux.

4. Dispositif (10) selon l'une des revendications précédentes, **caractérisé en ce que** la face intérieure (21) du dispositif (10) avec l'au moins un bombement (23) est orientée à la verticale durant une utilisation normale du dispositif (10).

5. Dispositif (10) selon l'une des revendications précédentes, **caractérisé en ce que** le bombement (23) présente une étendue longitudinale.

6. Dispositif (10) selon l'une des revendications précédentes, **caractérisé en ce que** le dispositif (10) présente plusieurs bombements (23) sur la face intérieure (21).

7. Dispositif (10) selon la revendication 6, **caractérisé en ce que** les bombements (23) présentent une étendue longitudinale et s'étendent parallèlement l'un par rapport à l'autre.

8. Dispositif (10) selon la revendication 7, **caractérisé en ce que** l'écart entre les bombements (23) est plus grand que la largeur du bombement le plus large.

9. Dispositif (10) selon l'une des revendications précédentes, **caractérisé en ce que** le bombement (23) est formé en une pièce sur le dispositif (10).
